# EUROPEAN PATENT APPLICATION

(11) **EP 2 398 222 A1**
(43) Date of publication of application: **21.12.2011**
(21) Application number: 10741234.8
(22) Date of filing: 09.02.2010
(51) Int. Cl.: H04N 5/225, H04L 12/28, H04N 7/18

(54) **CAMERA SYSTEM**

(30) Priority: 16.02.2009 JP 2009033042
(71) Applicant: Toshiba Teli Corporation, Hino-shi Tokyo 191-0065 (JP)
(72) Inventor: KISHI, Junji, Tokyo 191-0065 (JP)
(74) Representative: Kröncke, Rolf
(86) International application number: PCT/JP2010/051901
(87) International publication number: WO 2010/092957

(57) **Abstract**

In a camera system wherein video signals generated by a plurality of cameras 5A and 5B are transmitted in units of image frames to a host PC 2, in a shared isochronous band through an IEEE1394 bus 3, each of the cameras 5A and 5B comprises an asynchronous streaming-packet receiving circuit 52 configured to receive an asynchronous streaming packet transmitted to the IEEE1394 bus 3, an asynchronous streaming-packet transmitting circuit 53 configured to transmit an asynchronous streaming packet to the IEEE1394 bus, and an image output switch 54 configured to supply a video signal generated by any camera, in the form of an isochronous packet, to the IEEE1394 bus 3 under the control of the asynchronous streaming-packet receiving circuit. The asynchronous streaming-packet receiving circuit 52 causes the asynchronous streaming-packet transmitting circuit 53 to transmit an acceptance packet, thereby enabling the image output switch 54 to transmit the isochronous packet, upon receiving an asynchronous streaming packet which is addressed to the asynchronous streaming-packet receiving circuit 52 and which assigns a right of using an isochronous band.

## Description

### Technical Field

This invention relates to a camera system configured to transmit video signals generated in a plurality of cameras via an IEEE1394 bus to a host-side apparatus on a shared isochronous band.

### Background Art

In the conventional camera system, wherein the video signals generated in a plurality of cameras are transmitted via an IEEE1394 bus to a host-side apparatus on a shared isochronous band, the cameras share the isochronous band divided into segments. (That is, the segments, each being a 125-µs cycle, are allocated to the respective cameras.) In this transmission scheme, a partial image signal in an image frame of each of video signals generated by each camera is sequentially transmitted in each cycle. Therefore, an image frame from a certain camera cannot be transmitted at once and received prior to image frames of other cameras. Consequently, the entire processing time will increase if video signals are processed in units of frame data, in one image processing apparatus.

In order to solve this problem, a transmitting means may be used, which changes the allocation of the isochronous band in units of frames. However, the operating efficiency of this transmitting means depends on the instantaneous response characteristic of the host-side apparatus (a host PC). Further, since a plurality of packets must be transmitted and received in order to allocate the isochronous band again (i.e., to release the isochronous band, and to allocate the isochronous band again), the data-processing load on the host PC is inevitably large. This results in the problem that the isochronous band can hardly be switched at high speed.

A prior technique of controlling the transfer of data is available for use in a camera system in which a plurality of cameras are connected. In the technique, camera units are sequentially connected to a camera controller. To request a camera unit to transfer data, the camera controller transmits a packet via channel ch1 to each camera unit, designating the release of the right of using the cannel ch2. (Refer to Patent Literature 1.)

### Citation List

### Patent Literature

PTL1: Jpn. Pat. Appln. KOKAI Publication No. 2008-79142

### Summary of Invention

### Technical Problem

The conventional system in which, as described above, the video signals generated in a plurality of cameras are transmitted in a real time fashion through the IEEE1394 bus to the host-side apparatus on a shared isochronous band, is so configured that the isochronous band is divided into segments, which are used by the respective cameras. Because of this prior system configuration, a specific image frame cannot be received prior to any others. Further, if the system is configured to change the isochronous band allocation to the respective image frames, the data-processing load on the host-side apparatus will be large. This results in the problem that the isochronous band can hardly be switched at high speed.

An object of this invention is to provide a camera system in which the video signals generated in a plurality of cameras are transmitted, in units of image frames, in real time through an IEEE1394 bus to a host-side apparatus on a shared isochronous band, and which can solve the above-mentioned problem, thereby reducing the data-processing load on the host-side apparatus and rendering it possible to switch the isochronous band at high speed.

### Solution to Problem

The present invention provides a camera system in which video signals generated by a plurality of cameras are transmitted in units of image frames to a host-side apparatus, in a shared isochronous band through an IEEE1394 bus, each of the cameras comprising:
an asynchronous streaming-packet receiving circuit configured to receive an asynchronous streaming packet transmitted to the IEEE1394 bus;
an asynchronous streaming-packet transmitting circuit configured to transmit an asynchronous streaming packet to the IEEE1394 bus; and
an image output switch configured to supply a video signal generated by any camera, in the form of an isochronous packet, to the IEEE1394 bus under the control of the asynchronous streaming-packet receiving circuit,
wherein the asynchronous streaming-packet receiving circuit is configured to cause the asynchronous streaming-packet transmitting circuit to transmit an acceptance packet, thereby rendering the image output switch to an enabling condition to transmit the isochronous packet, upon receiving an asynchronous streaming packet which is addressed to the asynchronous streaming-packet receiving circuit and which assigns a right of using an isochronous band.

Thus, this invention can provide a camera system in which the video signals generated in a plurality of cameras are transmitted to a host-side apparatus, in units of image frames via an IEEE1394 bus in real time on a shared isochronous band. In this camera system, an asynchronous streaming packet transmitting/receiving circuit is provided in each camera, and the isochronous band is assigned and accepted between the cameras as well as between the cameras and the host-side apparatus through the asynchronous streaming packet transmitting/receiving circuit. Hence, this invention can provide a system in which the data-processing load of the host-side apparatus is reduced (or minimized), making it possible to switch the isochronous band on the IEEE1394 bus at high speed.

Since the system has the function of assigning and accepting the isochronous band by using an asynchronous streaming packet, the host-side apparatus comprises means for acquiring and storing, as log data, the content of any asynchronous streaming packet. The system is therefore configured, enabling the host-side apparatus to perform a process of recognizing the time-out of the packet transfer between the nodes. The camera system can thus be configured without providing a time-out processing function in the cameras at a plurality of nodes. This helps simplify each camera in terms of configuration, ultimately providing a camera system advantageous in an economical point of view.

### Advantageous Effects of Invention

This invention can provide a system in which the video signals generated in a plurality of cameras are transmitted to a host-side apparatus, in units of image frames through an IEEE1394 bus in real time on a shared isochronous band, and the data-processing load on the host-side apparatus is reduced, making it possible to switch the isochronous band at high speed.

### Brief Description of Drawings

FIG. 1 is a block diagram showing the overall configuration of a camera system according to an embodiment of this invention, and also outlining the process sequence of assigning the isochronous band by using an asynchronous packet (ASP);
FIG. 2 is a block diagram showing the major components of a camera system according to the embodiment of this invention;
FIG. 3 is a diagram showing the operation timing of the camera system according to the embodiment; and
FIG. 4 is a diagram showing the communication flow in the camera system according to the embodiment.

### Description of Embodiments

An embodiment of this invention will be described with reference to the accompanying drawings.

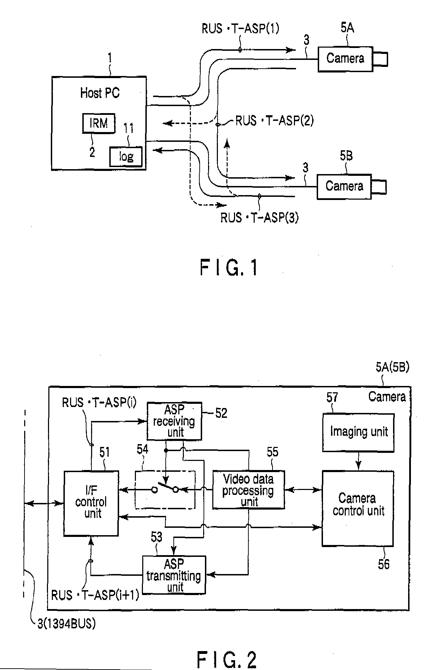

FIG. 1 shows the overall configuration of a camera system according to the embodiment of this invention. FIG. 2 shows the major components of the camera system. The camera system according to this embodiment has only two cameras, thus simplifying the description of the embodiment. Nonetheless, three or more cameras (63 nodes at most, including hubs) can be connected in the system. FIG. 1 also shows flows (1) to (3) of an isochronous-band assigning command (RUS·T-ASP) for assigning the isochronous band by using an asynchronous streaming packet (ASP).

In the camera system according to the embodiment of this invention, the video signals generated in a plurality of cameras 5A and 5B (i.e., video data output from the imaging unit of the cameras) are transmitted in units of image frames, as shown in FIG. 1, in real time through an IEEE1394 bus 3 to a host-side apparatus 1 (hereinafter called "host PC") on a shared isochronous band. As shown in FIG. 2, the cameras 5A and 5B each comprises an asynchronous streaming-packet receiving circuit (ASP receiving unit) 52, an asynchronous streaming-packet transmitting circuit (ASP transmitting unit) 53, and an image output switch 54. The asynchronous streaming packet receiving circuit 52 is configured to receive an asynchronous streaming packet (ASP) transmitted to the IEEE1394 bus 3. The asynchronous streaming packet transmitting circuit 53 is configured to transmit an asynchronous streaming packet (ASP) to the IEEE1394 bus 3. When controlled by the asynchronous streaming packet receiving circuit 52, the image output switch 54 sends, to the IEEE1394 bus 3, the video data output from the imaging unit of the camera, in the form of an isochronous packet. On receiving an asynchronous streaming packet (RUS·T-ASP) addressed to it, which assigns the right of using the isochroous band, the asynchronous streaming packet receiving circuit 52 causes the asynchronous streaming-packet transmitting circuit 53 to transmit the packet received, and enables (switch on) the image output switch 54 to transmit the isochronous packet.

The configuration and operation of the camera system according to the embodiment will be explained in detail.

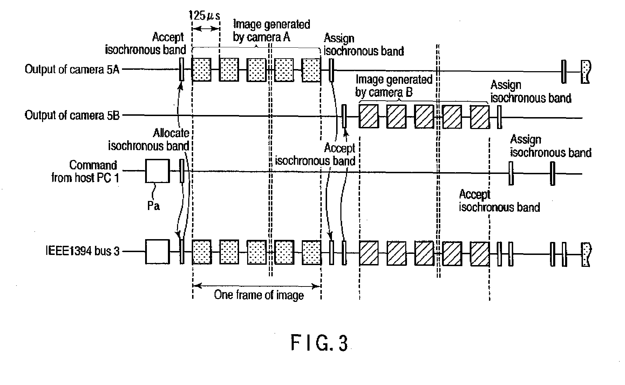

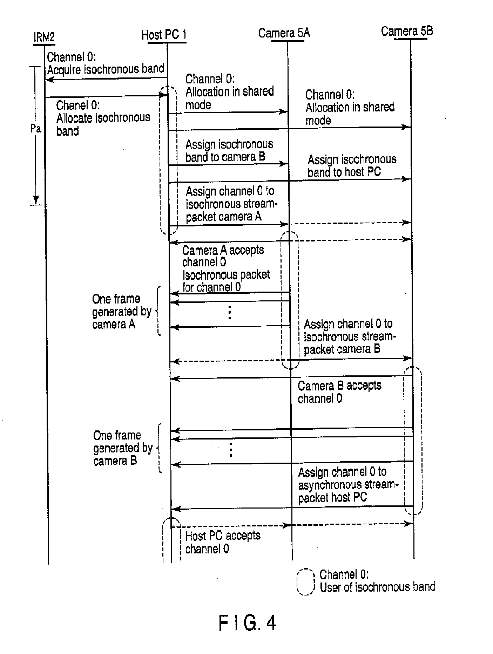

The host PC 1 shown in FIG. 1 comprises an isochronous resource manager (IRM) 2 configured to manage resources on the IEEE1394 bus 3, and a processing means for performing communication with the isochronous resource manager (IRM) 2 and IEEE1394 bus 3. The host PC 1 comprises a communication means configured to request the isochronous resource manager 2 for the isochronous band, another communication means configured to allocate isochronous channels acquired by requesting for the isochronous band, to the cameras 5A and 5B in a "shared mode", a further communication means configured to designate an assignee of the isochronous band, after the isochronous band has been used for the cameras 5A and 5B, a asynchronous streaming packet communication means configured to transmit asynchronous streaming packets (ASP) to the cameras 5A and 5B, and receives the asynchronous streaming packets (ASP) transmitted from the cameras 5A and 5B, a processing means for processing log data, a log management storage means 11, and a time-out processing means. The processing means acquires, as log data, the data of the asynchronous streaming packet (ASP) sent to the IEEE1394 bus 3, the log management storage means 11 is configured to store a back log, and the time-out processing means is configured to perform a process of recognizing the time-out of the packet transfer between nodes, in accordance with the content (assignment/acceptance) of the log data stored in the log management storage means 11. The asynchronous streaming packet communication means has a function of transmitting and receiving an asynchronous streaming packet (RUS·T-ASP) that assigns the right of using the isochronous band. The functions of these means will be later described in detail, with reference to FIG. 3 and FIG. 4.

As FIG. 2 shows, each of the cameras 5A and 5B comprises an IEEE1394 interface control circuit (I/F control unit) 51, an asynchronous streaming packet receiving circuit (ASP receiving unit) 52, an asynchronous streaming-packet transmitting circuit (ASP transmitting unit) 53, an image output switch 54, a camera control circuit (camera control unit) 56, a video data processing circuit (video data processing unit) 55, and an imaging unit 57. The IEEE1394 interface control circuit 51 constitutes a bus interface for the nodes that can be connected to the IEEE1394 bus 3. The asynchronous streaming-packet receiving circuit 52 receives the asynchronous streaming packet transmitted to the IEEE1394 bus 3. The asynchronous streaming-packet transmitting circuit 53 transmits asynchronous streaming packet to the IEEE1394 bus 3. The image output switch 54 is configured to supply to the IEEE1394 bus 3 the video data output from the imaging unit 57, in the form of an isochronous packet, when controlled by the asynchronous streaming-packet receiving circuit 52. The camera control circuit 56 controls the other components of the camera, to perform various controls including the start and end of the imaging process. Under the control of the camera control circuit 56, the video data processing circuit 55 generates isochronous packets from the video data output from the imaging unit 57, and supplies the isochronous packets to the image output switch 54. The imaging unit 57 comprises a solid-state imaging unit and an optical system. The solid-state imaging unit includes, for example, a charge coupled device (CCD) image sensor or complementary metal oxide semiconductor (CMOS) image sensor.

The asynchronous streaming-packet receiving circuit 52 comprises a function of receiving a use-right assignment packet (RUS·T-ASP) transmitted to the IEEE1394 bus 3 and informing of the right of using the isochronous band, and has a function of analyzing commands (i.e., packet analyzing function). The use-right assignment packet (RUS·T-ASP) notifies that the right of using the isochronous band is assigned to an assignee of the isochronous band. Further, the asynchronous streaming-packet receiving circuit 52 first causes, on receiving the asynchronous streaming packet (RUS·T-ASP) addressed to it and showing that the right of using the isochronous band is assigned, the asynchronous streaming-packet transmitting circuit 53 to transmit the acceptance packet it has received, and then changes the state of the image output switch 54, from a disabled (switch-off) state to enabled (switch-on) state. As a result, the isochronous packets, i.e., packetized video data, can be transmitted to the IEEE1394 bus 3.

The asynchronous streaming-packet transmitting circuit 53 has a function of transmitting an acceptance packet and a use-right assignment packed (RUS·T-ASP). The acceptance packet informs that the right of using the isochronous band has been received. The use-right assignment packet notifies that the right of using the isochronous band is assigned. On receiving the asynchronous streaming packet (RUS·T-ASP) addressed to it and notifying that the asynchronous streaming-packet receiving circuit 52 assigns to it the right of using the isochronous band, the asynchronous streaming-packet transmitting circuit 53 transmits an acceptance packet to the IEEE1394 bus 3 via the IEEE1394 interface control circuit 51, notifying that it has received the right of using the isochronous band. After the isochronous packets have been transmitted to the IEEE1394 bus 3 via the image output switch 54, the asynchronous streaming-packet transmitting circuit 53 receives a transfer-end notification from the asynchronous streaming-packet receiving circuit 52 and transmits a use-right assignment packet (RUS·T-ASP) to the IEEE1394 bus 3 via the IEEE1394 interface control circuit 51. The asynchronous streaming packet transmitted from the asynchronous streaming-packet transmitting circuit 53 is distributed to the nodes provided on the IEEE1394 bus 3. The packets, which are handled in the asynchronous streaming-packet receiving circuit 52 and asynchronous streaming-packet transmitting circuit 53, are broadcast transfer data of the known type, and transferred (distributed) to all nodes connected to the IEEE1394 bus 3.

The image output switch 54 is disabled (switched off) or enabled (switched on) by the asynchronous streaming-packet receiving circuit 52, to transmit the isochronous packets received from the video data processing circuit 55, to the IEEE1394 bus 3 via the IEEE1394 interface control circuit 51. That is, the image output switch 54 has a function of controlling the outputting of the video data to the IEEE1394 bus 3 via the IEEE1394 interface control circuit 51 by means of the isochronous packets. After the asynchronous streaming-packet receiving circuit 52 has received the assignment packet (RUS·T-ASP) addressed to it (addressed to its node) and has transmitted the acceptance packet from the asynchronous streaming-packet transmitting circuit 53, the image output switch 54 is switched from the disabled (switch-off) state to the enabled (switch-on) state by means of the asynchronous streaming-packet receiving circuit 52, Once the image output switch 54 has been enabled (switched on), the isochronous packets generated by packetizing the video data output from the imaging unit 57 of the camera are transmitted to the IEEE1394 bus 3 via the IEEE1394 interface control circuit 51.

The video data processing circuit 55 generates isochronous packets by packetizing the video data and thus generated isochronous packets are sent, using the isochronous band, to the image output switch 5 as data to be output-controlled, under the control of the camera control circuit 56. After one-frame video data has been transmitted in the form of this isochronous packets, the image output switch 54 is switched from the enable (switch-on) state in which it can transmit isochronous packets, to the disable (switch-off) state in which it cannot transmit isochronous packets, under the control of the asynchronous streaming-packet receiving circuit 52.

The camera control circuit 56 controls the imaging unit 57, and transmits the video data output from the imaging unit 57, to the video data processing circuit 55, in accordance with the instruction command received at the IEEE1394 interface control circuit 51.

The communication process of the camera system described above will be explained with reference to FIG. 3 showing the operation timing of the camera system and FIG. 4 showing the communication flow of the camera system.

To transmit the video data items output from a plurality of cameras 5A and 5B to the host PC 1, in real time via the IEEE1394 bus 3 in units of image frames sharing the isochronous band, the host PC 1 makes a request for isochronous band, to the isochronous resource manager (IRM) 2. At this point, the band width value of the isochronous band is determined for the camera 5A or the camera 5B, which transfers more data than the other.

After acquiring the isochronous band, the PC 1 allocates, in shared mode, the channel (channel 0) secured to the cameras 5A and 5B of each node. This allocation is notified by using an asynchronous packet.

Now that the channel (channel 0) has been allocated to the cameras 5A and 5B in shared mode, the cameras 5A and 5B remain in the state of transmitting no video data (no isochronous packets) to the IEEE1394 bus 3. In each of the cameras 5A and 5B, the asynchronous streaming-packet receiving circuit 52 receives a command designating the shared mode and analyzes this command, disabling (switching off) the image output switch 54. On receiving the notification of the allocation of the channel 0, the asynchronous streaming-packet receiving circuit 52 disables (switches off) the image output switch 54.

Next, the host PC 1 designates to the cameras 5A and 5B, using an asynchronous packet, an assignee that will use the isochronous band after the use of the isochronous band. In the instance shown in FIG. 4, the isochronous band is assigned to the host PC 1, camera 5A, camera 5B, and host PC 1, in the order mentioned. Therefore, the isochronous band assigned to the camera 5A is assigned to the camera 5B, and the assignee is designated from camera 5B to the host PC 1. On receiving the notification of the assignee (i.e., node-designating information specifying the assignee), the asynchronous streaming-packet receiving circuit 52 gives the node-designating information to the asynchronous streaming-packet transmitting circuit 53. The asynchronous streaming-packet transmitting circuit 53 holds the node-designating information specifying the assignee notified by the asynchronous streaming-packet receiving circuit 52. Thereafter, on receiving a notification showing the completion of one-frame transfer from the video data processing circuit 55 via the asynchronous streaming-packet receiving circuit 52, the asynchronous streaming-packet transmitting circuit 53 transmits an asynchronous streaming packet (RUS·T-ASP), which designates the assignee and assigns the right of using the isochronous band, to the IEEE1394 bus 3 via the IEEE1394 interface control circuit 51 (thus distributing the packet to each node on the IEEE1394 bus 3), in accordance with the held node-designating information. Meanwhile, the asynchronous streaming-packet receiving circuit 52 disables (switches off) the image output switch 54, upon receiving the notification showing the completion of one-frame data transfer. Note that host PC 1 uses an asynchronous packet to allocate the channel and to designate an assignee.

In FIG. 3 and FIG. 4, a symbol Pa indicates the process the host PC 1 has performed thus far (i.e., acquiring the channel from the isochronous resource manager 2, setting the shared mode to the cameras 5A and 5B connected to the IEEE1394 bus 3, and designating the assignee of the isochronous band).

After this process has been performed, the right of using the isochronous band is assigned and accepted by using asynchronous streaming packets, and the video data is transferred in the isochronous band, in units of image frames in the form of isochronous packets.

After designating the assignee of the isochronous band, the host ?C 1 uses an isochronous streaming-packet, assigning the right of using the isochronous band to the camera 5A that should be first assigned with this right. That is, the host PC 1 transmits a use-right assignment packet (RUS·T-ASP) to the IEEE1394 bus 3. The use-right assignment packet (RUS·T-ASP) is distributed (or broadcast-transferred) to each node on the IEEE1394 bus 3 that connects the cameras 5A and 5B. The host PC 1 acquires the data of the use-right assignment packet (RUS·T-ASP) on the IEEE1394 bus 3, as a back log, and stores the same in the log management storage means 11. The use-right assignment packet (RUS·T-ASP) notifying the assignment of the right of using the isochronous band is shown as "RUS T-ASP(1)" in FIG. 1.

On receiving an asynchronous streaming-packet (RUS·T-ASP) addressed to it, which notifies the assignment of the right of using the isochronous band, the camera 5A transmits an acceptance packet showing that the right of using the isochronous band has been assigned. In the camera 5A, the asynchronous streaming-packet receiving circuit 52 instructs the asynchronous streaming-packet transmitting circuit 53 to transmit the acceptance packet, on receiving the asynchronous streaming packet (RUS·T-ASP) addressed to it. In accordance with the instruction coming from the asynchronous streaming-packet receiving circuit 52, the asynchronous streaming packet-transmitting circuit 53 transmits, to the IEEE1394 bus 3, the acceptance packet showing that the right of using the isochronous band has been assigned. This acceptance packet is distributed (broadcast-transferred) to the nodes on the IEEE1394 bus 3, to which are connected the cameras 5A and 5B. The host PC 1 acquires, as the back log, the data of the acceptance packet on the IEEE1394 bus 3, and stores the acceptance packet in the log management storage means 11.

After transmitting the acceptance packet, the camera 5A uses the isochronous band, transmitting isochronous packets containing the video data. The asynchronous streaming-packet receiving circuit 52 of the camera 5A confirms the transmission of the acceptance packet, and switches the image output switch 54 from the disabled (switch-off) state to the enabled (switch-on) state. Then, the asynchronous streaming-packet receiving circuit 52 instructs the video data processing circuit 55 to packetize the video data. The video data processing circuit 55 generates isochronous packets from the video data output from the imaging unit 57. The isochronous packets are output, as data to be controlled, to the image output switch 54. Now switched to the enabled (switch-on) state, the image output switch 54 transmits the isochronous packets received from the video data processing circuit 55, to the IEEE1394 bus 3 via the IEEE1394 interface control circuit 51. The isochronous packets transmitted to the IEEE1394 bus 3 are received by the host PC 1.

After transferring the isochronous packets for one image frame, the camera 5A uses an isochronous streaming packet, assigning the right of using the isochronous band to the camera 5B. After the isochronous packets for one image frame have been transferred, the asynchronous streaming-packet receiving circuit 52 of the camera 5A switches the image output switch 54 from the enabled (switch-on) state to the disabled (switch-off) state, and instructs the asynchronous streaming-packet transmitting circuit 53 to transmit the use-right assignment packet (RUS·T-ASP). So instructed, the asynchronous streaming-packet transmitting circuit 53 transmits the use-right assignment packet (RUS·T-ASP) to the IEEE1394 bus 3 via the IEEE1394 interface control circuit 51, notifying that the right of using the isochronous band should be assigned to the camera 5B. The use-right assignment packet (RUS·T-ASP) is distributed (broadcast-transferred) to each node on the IEEE1394 bus 3. The host PC 1 acquires, as the back log, the use-right assignment packet (RUS·T-ASP) on the IEEE1394 bus 3, and stores the same in the log management storage means 11. The use-right assignment packet (RUS·T-ASP) notifying the assignment of the right of using the isochronous band is shown as "RUS T-ASP(2)" in FIG. 1.

On receiving the asynchronous streaming packet (RUS·T-ASP) addressed to it and notifying the assignment of the isochronous band, the camera 5B transmits an acceptance packet indicating that the right of using the isochronous band has been assigned by virtue of the asynchronous streaming packet. On receiving the asynchronous streaming packet (RUS·T-ASP) addressed to the camera 5B, the asynchronous streaming-packet receiving circuit 52 of the camera 5B instructs the asynchronous streaming-packet transmitting circuit 53 to transmit the acceptance packet. In accordance with the instructions coming from the asynchronous streaming-packet receiving circuit 52, the asynchronous streaming-packet transmitting circuit 53 transmits, to the IEEE1394 bus 3, the acceptance packet indicating that the right of using the isochronous band has been assigned. The acceptance packet is distributed (broadcast-transferred) to the nodes (i.e., camera 5A and host PC 1) on the IEEE1394 bus 3. The host PC 1 acquires, as the back log, the data of the acceptance packet on the IEEE1394 bus 3, and stores the same in the log management storage means 11.

After transmitting the acceptance packet, the camera 5B uses the isochronous band, transmitting the video data in the form of isochronous packets. The asynchronous streaming-packet receiving circuit 52 of the camera 5B confirms the transmission of the acceptance packet, and switches the image output switch 54 from the disabled (switch-off) state to the enabled (switch-on) state. Then, the asynchronous streaming-packet receiving circuit 52 instructs the video data processing circuit 55 to process the video data packets. The video data processing circuit 55 generates isochronous packets from the video data output from the imaging unit 57. The isochronous packets are output, as data to be controlled, to the image output switch 5. Now switched to the enabled (switch-on) state, the image output switch 54 transmits the isochronous packets received from the video data processing circuit 55, to the IEEE1394 bus 3 via the IEEE1394 interface control circuit 51. The isochronous packets transmitted to the IEEE1394 bus 3 are received by the host PC 1.

After transferring the isochronous packets for one image frame, the camera 5B uses an isochronous streaming packet, assigning the right of using the isochronous band. After the isochronous packets for one image frame have been transferred, the asynchronous streaming-packet receiving circuit 52 of the camera 5B switches the image output switch 54 from the enabled (switch-on) state to the disabled (switch-off) state, and instructs the asynchronous streaming-packet transmitting circuit 53 to transmit the use-right assignment packet (RUS·T-ASP). So instructed, the asynchronous streaming-packet transmitting circuit 53 transmits the use-right assignment packet (RUS·T-ASP) to the IEEE1394 bus 3 via the IEEE1394 interface control circuit 51, notifying that the right of using the isochronous band should be assigned to the camera 5B. The use-right assignment packet (RUS·T-ASP) notifying the assignment of the right of using the isochronous band is shown as "RUS T-ASP(3)" in FIG. 1.

Thus, the right of using the isochronous band is assigned and accepted between the nodes, by using the asynchronous streaming packet. The isochronous band can therefore be shared to transfer image frames generated by any camera in the camera system having an IEEE1395 bus to which a plurality of cameras are connected. The isochronous band can be assigned between the cameras irrespective of the host PC 1, except the initial assignment of the right from the host PC 1 to the camera 5A. Since the assignment packet and the acceptance packet of the isochronous band are provided in the form of the asynchronous streaming packets, they can be acquired by the host PC 1. Hence, the host PC 1 can determine which camera holds the isochronous band at present, without inquiring each camera. Moreover, if the use-right assignment fails, the host PC 1 can later investigate where the assignment has failed, on the basis of the assignment packet and acceptance packet stored in the log management storage means 11. This minimizes the data-processing load on the host PC 1, making it possible for the cameras to share the isochronous band. As a result, the speed of processing data can be greatly increased in the system wherein the video data items are processed in the order they have been generated by the cameras.

As has been described, in a camera system according to this invention, wherein the video signals generated by a plurality of cameras are transmitted in units of image frames to the host-side apparatus via an IEEE1394 bus in an isochronous band, an asynchronous streaming packet transmitting/receiving circuit is provided in each camera, and an isochronous band is assigned and accepted between the cameras and between any camera and the host-side apparatus, by using an asynchronous streaming packet. Hence, this invention can provide a system in which the data-processing load of the host-side apparatus is minimized thereby making it possible to switch the isochronous band on the IEEE1394 bus at high speed.

In addition, the system has the function of assigning and accepting an isochronous band by using the asynchronous streaming packet. The camera system can therefore have a means for first acquiring the content of an asynchronous streaming packet transmitted to the host-side apparatus via the IEEE1394 bus and then storing the content of the packet, as a log data. The host-side apparatus can therefore recognize the time-out of the packet transfer between nodes. The camera at each node need not have a function of processing the time-out in this camera system. This helps to simplify the structure of each camera. This ultimately can provide a camera system advantageous in an economical point of view. The present invention is not limited to the embodiment described above. The components of the embodiment can be modified in various manners in reducing the invention to practice, without departing from the sprit or scope of the invention. Explanation of Symbols
1. Host-side apparatus
2. Isochronous resource manager (IRM)
3. IEEE1394 bus
5A, 5B. Cameras
11. Log management storage means
51. IEEE1394 interface control circuit (I/F control unit)
52. Asynchronous streaming-packet receiving circuit (ASP receiving unit)
53. Asynchronous streaming-packet transmitting circuit (ASP transmitting unit)
54. Image output switch
55. Video data processing circuit (video data processing unit)
56. Camera control circuit (camera control unit)
57. Imaging unit
RUS·T-ASP. Asynchronous streaming packet for assigning the right of using isochronous band

## Claims

1. A camera system in which video signals generated by a plurality of cameras are transmitted in units of image frames to a host-side apparatus, in a shared isochronous band through an IEEE1394 bus, each of the cameras **characterized by** comprising:
an asynchronous streaming-packet receiving circuit configured to receive an asynchronous streaming packet transmitted to the IEEE1394 bus;
an asynchronous streaming-paaket transmitting circuit configured to transmit an asynchronous streaming packet to the IEEE1394 bus; and
an image output switch configured to supply a video signal generated by any camera, in the form of an isochronous packet, to the IEEE1394 bus under the control of the asynchronous streaming-packet receiving circuit,
wherein the asynchronous streaming-packet receiving circuit causes the asynchronous streaming-packet transmitting circuit to transmit an acceptance packet, thereby enabling the image output switch to transmit the isochronous packet, upon receiving an asynchronous streaming packet which is addressed to the asynchronous streaming-packet receiving circuit and which assigns a right of using an isochronous band.

2. The camera system according to claim 1, **characterized in that** the host-side apparatus comprises communication means for achieving communication with an isochronous resource manager, means for requesting the isochronous resource manager for an isochronous band, means for allocating channels acquired in accordance with the request, to the cameras in a shared mode, and means for designating an assignee of the isochronous band after the isochronous band has been used for the cameras.

3. The camera system according to claim 1, **characterized in that** the host-side apparatus comprises means for acquiring the content of the asynchronous streaming packet transmitted to the IEEE1394 bus and storing the same as log data.

4. The camera system according to claim 2, **characterized in that** the host-side apparatus comprises communication means for allocating the channels acquired in accordance with the request for the isochronous band, to the cameras in the shared mode, and communication means for designating the assignee to each of the cameras.

5. The camera system according to claim 4, **characterized in that** the host-side apparatus uses an asynchronous packet to allocate the channels to the cameras in the shared mode and to designate the assignee to each of the cameras.
